# EUROPEAN PATENT SPECIFICATION

(11) **EP 3 169 511 B1**
(45) Date of publication and mention of the grant of the patent: **13.07.2022**
(21) Application number: 15741274.3
(22) Date of filing: 16.07.2015
(51) Int. Cl.: B29C 73/16, B60S 5/04, B29L 30/00

(54) **PRODUCT DELIVERY DEVICE INCLUDING AN IN-LINE PRESSURE GAUGE**
PRODUKTFREISETZUNGSVORRICHTUNG MIT IN-LINE-DRUCKMESSER
DISPOSITIF DE DISTRIBUTION DE PRODUIT COMPRENANT UN MANOMÈTRE EN LIGNE

(30) Priority: 18.07.2014 GB 201412814
(43) Date of publication of application: 24.05.2017
(73) Proprietor: Holt Lloyd International Limited, Manchester M32 0YQ (GB)
(72) Inventor: ELLIS, Bruce, Manchester M29 7BS (GB); HITCHMAN, Richard, Bromsgrove, Worcestershire B61 8PU (GB)
(74) Representative: Houghton, Mark Phillip
(86) International application number: PCT/GB2015/052062
(87) International publication number: WO 2016/009215

(56) References cited:
- DE-A1- 10 314 075
- DE-A1-102007 030 462
- US-A- 5 403 417
- US-A1- 2014 166 155

## Description

### BACKGROUND

The present invention relates to product delivery devices for tire inflation and tire repair products and, more particularly, to product delivery devices having an in-line pressure gauge for measuring a pressure of a tire being inflated or repaired.

The wheels of many vehicles are equipped with pneumatic tires. A wheel rim, normally being cylindrical is equipped with peripheral flanges within which inner edges of a pneumatic tire may be located. A pneumatic tire attached to a wheel rim may be inflated directly with gas under pressure or may be inflated by means of an inner tube which itself is inflated with gas. The persisting problem with pneumatic tires is that of a puncture occurring, namely when a portion of the tire, or inner tube, is pierced and the structure can no longer retain gas under pressure so as to function as a pneumatic tire. As is well-known, it is essential for a pneumatic tire to be filled with gas, typically air, at a designed-for pressure for a tire to perform safely and effectively. A number of well-known defects occur due to over or under inflation of a tire and differential pressures between tires on a given vehicle (nearside versus offside etc.) and these can be safety critical.

Whilst an optimal solution when a tire is punctured is to replace the tire, there are many situations in which this may not be possible or desirable. It may not be possible to replace the tire when, for example, the driver of the vehicle is not trained to do so or because they do not have the physical strength to either remove the wheel fixings with the tools provided with the vehicle, or lift the spare wheel from its location on the vehicle. On occasion the location may be on the underside of the vehicle or in the boot/trunk. On larger vehicles such as sports utility or off-road vehicles, the spare wheel can weigh in excess of 20Kg. Furthermore, if a puncture occurs whilst the vehicle is located on an area of soft or uneven ground such as an incline, it may not be possible to safely jack up the car to remove and replace the wheel with a spare. Other undesirable situations include where the puncture has occurred in a dangerous area such as on a high speed road (motorway/highway), or where the environmental conditions are unfavorable. On occasion, the location of the spare tire may mean that the contents of the trunk / boot need to be removed first.

It is standard practice, where a puncture of maximum diameter 5mm, occurs in a part of a tire such as through the tread, as opposed to a sidewall, that a repair may be carried out, such as by means of utilising a plug of rubberised material placed into an aperture formed by first drilling out an area surrounding the puncture (after removal of any object causing the puncture), the plug being of diameter 6mm and placed from the inside of the tire and being retained in place by adhesive and tire pressure on inflation. This method of repair requires the tire to be removed from the rim and requires carrying out by a repair professional and to the relevant standard operating procedure (BS AU 159f in United Kingdom), using specific equipment.

Other methods of temporary repair include using various fillers and adhesives, patches and similar methods that may be applied at the roadside and do not require the tire to be removed from the rim. Of these various methods of tire repair, one method and apparatus relevant to the present invention is that of a self-sealing composition. Self-sealing compositions are typically delivered by a structure (or structures for balance) based inside a wheel rim or from an external reservoir and gas source. Modern legislation governing the fleet average emissions of a vehicle manufacturer has led to many vehicles being supplied without a spare tire. This omission helps the manufacturer to achieve fleet average emissions targets by reducing vehicle weight. Furthermore the manufacturer can more effectively utilize the space otherwise taken up by the spare wheel. Where a spare tire is not provided as standard, or original equipment by the vehicle manufacturer, a puncture repair kit is normally provided. Typically the kit comprises a self-sealing composition to repair the puncture and a compressor to provide compressed air to inflate a tire to the safe working pressure. A drawback of these systems the length of time required to fully inflate the tire to a safe working pressure as well as cost and complexity. Typical compressors supplied as part of a puncture repair kit are capable of achieving a safe working pressure in 10 minutes, but varies by tire size (internal volume) and puncture type and location since as the tire is being inflated, the compressed air will escape through the puncture before it is sealed. Known apparatus for tire repair are disclosed in GB 2 452 137, EP 2 058 112, EP 2 103 417, EP 2 286 984, US 6,789,581, US 8,746,292, US 2013/0105055, WO 2005/085028 and WO 2014/117098. Such apparatus are complex and costly produce and by the very nature of tire sealant compositions, which seal tubes, have limited potential in actual use for extended re-use to offset this.

Alternative systems exist where a self-sealing composition and a liquefiable gas are combined in the form of a single use canister. DE 103 14 075 evidences a basic single use canister type product. Canisters comprising a self-sealing composition are known, emergency repair tools but suffer from limitations. In particular, they are difficult to administer accurately and the resulting tire pressure may not be safe. This limits their application.

Self-sealing compositions typically comprise a carrier liquid, so as to provide fluidity, and enable ready distribution of the composition inside a tire. They also typically comprise a polymeric component having adhesive properties which may optionally change characteristics on exposure to air so as to cure and increase viscosity and/or adhesion and so as to effect a blockage and so sealing of a puncture aperture. A further typical component is a solid material, such as a fiber, which serves to block any aperture through which it is attempted to be forced (i.e. a puncture hole in a tire) and so can effect a blockage of a puncture aperture.

Self-sealing compositions in canisters are known in several forms. In some forms equipment comprising a compressor, the self-sealing composition and means to convey that composition, typically through a tire valve, into a deflated pneumatic tire are provided. This equipment is effective, as gas of a regulated and known pressure may be provided and the source of the gas kept separate from the self-sealing composition which by its very nature is intended to block narrow passageways. Further, the self-sealing composition may be introduced at an optimum time and sequence with such equipment. The simplest form of equipment is an apparatus in the form of an aerosol-type canister comprising a compressed gas for the purposes of driving a self-sealing composition through a transfer tube into a tire, through some form of valve arrangement. Such apparatus can be difficult to operate, particularly in an emergency situation as the propellant must fulfil a dual purpose of transferring the repair composition as well as inflating the tire. Further any leakage, such as on connection and reconnection of the apparatus to a tire can give rise to loss of sealant under pressure, which the sealant tries to seal as it is designed to seal leakages, in addition to any puncture in the actual tire. Hence, a right-first-time inflation is required and top up after initial driving may not be possible. The system, apparatus plus tire, in use effectively comprises two valves, one on the canister and one on the tire, typically a Schrader valve. When both valves are open, the higher pressure in the canister allows the composition to be dispensed into the tire. A Schrader valve self-opens in the inlet direction under pressure. There are drawbacks to single use canister systems, such as aerosol format emergency tire repair products. As the limited amount of liquefied gas is transferred to the tire to inflate it to a safe working pressure it may escape via the punctured area, similarly to what occurs in combination canister and compressor kits. For systems such as these to work effectively, it is beneficial that the contents of the aerosol be transferred quickly, a safe working tire pressure attained and the vehicle driven to evenly distribute the self-sealing composition to the inside of the tread and in contact with the punctured area. If the vehicle is not driven, the self-sealing composition may not contact the punctured area and repair the tire sufficiently before a significant amount of inflation gas escapes via the puncture. It is therefore evident that such systems, whilst convenient and popular can be difficult to use effectively, particularly on first-use by an inexperienced user not fully understanding the need to follow the instructions to the letter. There are also typically problems when disconnecting the apparatus as the self-sealing composition will, for a short period, exit the Schrader valve, causing that valve to be self-sealed by repair composition which can stop further inflation or deflation to arrive at a safe pressure and causes further problems when a tire has to be removed for ultimate repair.

The issue with device disconnection and connection is particularly significant since a repair composition can exit the valve and valves are now being used which comprise an integral pressure sensor. These valves are not only expensive but any contamination of the valve will make them inoperable. Replacement of such valves in wheels or tires is difficult as they must be configured electronically to communicate with the control system of the vehicle and not of an adjacent vehicle. Failure of such valves may render a vehicle inoperable as the vehicle control system may disable the vehicle if an incorrect pressure reading is obtained. An objective of the present application is to provide an improved form of pneumatic tire inflation equipment for the provision of safe emergency tire inflation.

Patent document DE 103 14 075 A1 discloses a tyre inflation apparatus having the features of the preamble of claim 1.

A further objective of the present invention is to provide an improved form of pneumatic tire repair equipment for the provision of safer emergency tire repair.

A further objective of the present invention is to provide an improved form of pneumatic tire repair equipment and method of use thereof.

### THE INVENTION

The present invention in its various aspects is as set out in the appended claims. The present invention provides:
a tire inflation apparatus according to independent claim 1.

The pressurised container is preferably in the form of an aerosol canister. An aerosol canister is a well-known format comprising a sealed container having a single outlet equipped with said valve, particularly a one-way valve, through which contents of the canister are outlets under pressure generated by a composition within the container. The canister is preferably suitable for handheld use. A known handheld tire inflation & repair apparatus is not provided with means to measure pressure in the flow path and as such it is not possible to properly accurately measure the pressure to which a tire is inflated and thus determine if the pressure achieved is a safe pressure. This is particularly significant since the pressure generated in the tire at a later time will depend upon external ambient temperature. For example, if the apparatus is used in winter, then the pressure generated by the composition may be much lower than during the summer. Hence, any advice as to length of inflation time or perceived tire inflation amount is likely to be misleading. Further, use of an apparatus by actuating the valve will give rise to expansion of the tire inflator composition, which will reduce its temperature compared to the ambient temperature. This gives a further reason for perceived correct inflation of a tire to be erroneous. The tire inflator composition preferably comprises a liquid propellant (this gives rise to a separate product for long-term storage) however, a liquid propellant on volatilization to produce inflator gas further reduces temperature and, initial, achievable tire pressure. Furthermore, when such a tire inflator composition enters a tire, so as to inflate a pneumatic tire, it will be at a lower temperature than ambient, due to the expansion and cooling mentioned above and this will potentially give an overpressure when the tire is used due to heating of the tire generated by the effects of it rolling on a road. Hence provision of the gauge between the valve and the tire enables an equilibrium pressure to be observed so that it can be determined if the pressure obtained is a safe working pressure, or not. This would not otherwise be possible and is normally not considered feasible as tire sealant composition would be thought to hinder gauge operation.

In the tire inflation & repair apparatus of the present invention the fluid flow path is in the form of a tube, preferably a flexible tube. A ferrule is preferably attached to an end of the tube remote from the container, wherein the ferrule is adapted for attachment, in use, to a valve of a tire for permitting, on actuation of the valve, the composition to be transferred under pressure, measurable by said pressure gauge, from the container via the tube to a tire interior. Use of a flexible tube allows the canister to be positioned either in the hand of the user or on the ground next to the punctured tire. Furthermore the fluid flow path is preferably transparent so the user can see the transfer of sealing composition and gas. A flexible tube is preferred so that any blockage in the tube, particularly if a sealing component is also used as part of the composition, may be dislodged by flexing the tube, thus allowing a more accurate pressure reading. A flexible tube is therefore most preferably present between the ferrule and the gauge so as to best evidence this advantage.

The tire repair apparatus of the present invention preferably has the ferrule configured to attach to a valve of a tire such as to open the tire valve and allow movement of fluid through the valve, such as air out of the tire or the composition from the pressurized container into the tire. The type of ferrule is preferably a ferrule suitable for attaching to and actuating a Schrader valve. This is particularly advantageous, particularly when a sealing component is used as otherwise backflow of fluid from the tire, such as on premature detachment of the apparatus can cause the valve to close on the sealing component and seal the valve shut. A further advantage is that the pressure registered at the gauge is therefore representative of the pressure within the tire. In particular, when the valve on the canister is released the pressure will be a correct reading, at that moment in time of the pressure within the tire. This is not possible where a gauge is mounted in a position, which is at a side of the valve toward the container, such as in conventional, particularly tire repair, systems. As mentioned earlier, this is particularly significant with tires/wheels in which a pressure sensor is present and which can cause the vehicle to be disabled if the pressure sensor delivers an incorrect value, this is even more so if they sealing composition is used, as the sealing composition may contaminate such valves, such as a by filling a side channel in which a pressure sensor is located and render them inoperable. Similarly the sensitivity, based upon small area, being sensitive to small amounts of contaminant, of digital pressure sensors means that a mechanical pressure gauge is preferred in the present invention. Furthermore it is essential that the apparatus for repairing the tire is only disconnected once, as the disconnection is liable to exacerbate the possibility of tire valve contamination. A right first time approach to determining pressure is therefore essential, but is not available with current apparatus, particularly portable handheld apparatus such as a canister, in particular such as an aerosol canister, more particularly one in which a propellant component is admixed with a sealing component. These apparatus provide a compressor, a gauge and a dispensing portion for dispensing sealing component, in that order, and equipped with a one-way valve so is to stop sealing component contaminating the gauge. However, this gives rise to the gauge giving incorrect readings for the various reasons mentioned above regarding temperature affects all follows the usual effects on tire inflation, for example due to a Schrader valve, or equivalent.

The tire repair apparatus of the present invention may utilize a digital or mechanical gauge, but preferably has the pressure gauge as a mechanical pressure gauge comprising a pressure sensing diaphragm and an attached indicator, such as a dial, acting to move in response to deflection of the sensing diaphragm to provide a visual indication of pressure. This is preferable since a digital pressure gauge is more subject to incorrect readings because of coating of, for example, sealing component over a small; often minute, pressure detecting region. A sensing diaphragm being necessarily large in proportion to the size of the apparatus (being a handheld apparatus) would require considerable sealing component to contaminate the diaphragm before an incorrect reading was obtained. A preferred diaphragm diameter is 5mm or greater. The apparatus of the present invention preferably utilises a sealing component, itself comprising a foaming agent such that when dispensed from the container, through the device into a tire, the composition foams. This may be advantageous for distribution of sealing component inside a tire, such as to reach a puncture aperture or vent. This also provides the possibility that a foam meniscus forms at the inlet to a gauge so inhibiting fluid flow, but not pressure fluctuation into the gauge to contaminate it. This has the advantage that the delivery device is initially filled with propellant and the sealing component has therefore got no driving force to enter into the mechanism of the gauge and thus hinder its operation. The gauge is present in a side channel of the delivery device such that it is closed ended, i.e. forming a dead-end or spur. This reduces the chance of composition directly contacting the gauge so as to give an anomalous reading, such as by localized cooling from evaporating composition, it also enhances the possibility to form multiple meniscuses in a foaming composition to better protect the gauge.

The apparatus of the present invention may be a disposable apparatus. Whilst the configuration of the apparatus enables a pressure gauge to be effectively used, it may still effectively be a one-use device, particularly when used with a sealing component.

As will be understood from the foregoing the tire repair apparatus of the present invention preferably includes a sealing component and a propellant component. The propellant component may be a solvent for the sealing component, other than for any fibrous element of the sealing component. Alternatively, the sealing and propellant components may be immiscible, in which case a solvent may be present, to increase fluidity of the sealing component. This alternative may be beneficial so the apparatus can used in certain specific methods, as considered below.

The propellant component may comprise a volatile liquid forming a gas at 20°C and 1 atmosphere pressure. The gas is preferably an organic chemical comprising a molecule having a carbon chain backbone. The gas is preferably a fluorocarbon or hydro fluorocarbon as these have the advantage that there is a relatively low entropy of volatilization and so is to reduce the latent heat of volatilization effects mentioned above as well as giving low flammability. This has the advantage that fluid delivered from the container into the tire may comprise a portion of liquid component. This portion of liquid component serves to enter the delivery device including the gauge and when the apparatus is released from a tire to be repaired can fully volatilise to help clear out the delivery device enabling viable second use of the device. Hence, in the apparatus and also in the method of the present invention the propellant component is preferably in equilibrium between liquid and gaseous phases at the dispensing pressure of the apparatus.

Furthermore, the propellant component and the sealing component are preferably immiscible fluids, preferably liquids, in the container. This is for reasons as set out below regarding the method.

The sealing component may comprise an organic polymer and a solvent for the polymer. Such polymers may be configured to change their viscosity on exposure to the atmosphere and so enhance puncture repair.

The sealing component may comprise a fibrous component suitable for being entrained in and blocking a tire puncture. Such components whilst highly effective for tire repair are undesirable when a narrow conduit, such as a tube, is used as the delivery device since any incorrect attachment the device to a tire (such as not correctly attaching the ferrule to a Schrader valve) can result in blockage of the delivery device. Similarly the Schrader valve can block and/or any pressure sensor incorporated therein. Similarly, backflow through a tire valve can block that valve, such as in the above situation of incorrect attachment. More significantly for the present invention, the portion of the delivery device communicating with the gauge can become blocked. Combination with the volatile organic gas (derived from the liquid as above) is therefore advantageous and failure to realise this possibility has, quite possibly, stopped adaptation of known devices to ones similar to that disclosed in the present invention.

The apparatus of the present invention, as discussed above, is intended to be used in a method of carrying out an emergency inflation or repair & inflation of a pneumatic tire puncture comprising: providing an apparatus in one of the forms described above; attaching the delivery device to a valve of a tire to be repaired so as to place the inside of the pneumatic tire in fluid communication with the delivery device and; actuating the valve of the apparatus so as to bring the pressurised contents of the pressurised container into communication with the inner of the pneumatic tire; actuating said apparatus valve for sufficient time to inflate the tire to a pressure indicated on said gauge above a desired final tire pressure: closing said valve of the apparatus and waiting until the pressure indicated on said tire gauge stabilises to a steady reading: repeating said actuation of the valve of the apparatus and subsequent steps until a desired safe tire driving pressure is achieved.

Particularly with a handheld canister device where the volume of the canister is smaller than the volume of the tire being inflated there can be a notable difference in pressure between when the canister is actuated by means of the valve and when the valve is closed. This is due to a variety of temperature and elasticity effects and is a particularly significant reason why the gauge of the present invention enables a safe tire pressure to be knowingly achieved. These effects are particularly significant in cold weather where time to reach equilibrium temperature of the tire contents and the attached tube may be longer.

### BRIEF DESCRIPTION OF THE DRAWINGS

The subject matter, which is regarded as the invention, is particularly pointed out and distinctly claimed in the claims at the conclusion of the specification. The foregoing features, and other features and advantages of the invention, are further apparent from the following detailed description taken in conjunction with the accompanying drawings in which:
FIG. 1 is a side elevational view of a tire repair apparatus of the present invention including a pressurized container of a product delivery device attached to the pressurized container and including an in-line pressure gauge;
FIG. 2 is a cross-sectional view of the pressurized container, product delivery device, and in-line pressure gauge of FIG. 1;
FIG. 3 is a cross-sectional view similar to that of FIG. 2 and of further embodiment the present invention and depicting an in-line pressure gauge; and
FIG. 4 is a perspective view of a pressurized container and product delivery device with an in-line pressure gauge also the present invention and similar to that in FIGS. 1-3, wherein the product delivery device is attached, in an in use configuration, to a valve of a car tire.

Other aspects and advantages of the present invention will become apparent upon consideration of the following detailed description, wherein similar structures have like or similar reference numerals.

### DETAILED DESCRIPTION

The present invention is directed to product delivery devices in the form of an apparatus. While the product delivery devices of the present invention may be embodied in many different forms, several specific embodiments are discussed herein with the understanding that the present invention is to be considered only as an exemplification of the principles of the invention, as set out in the claims.

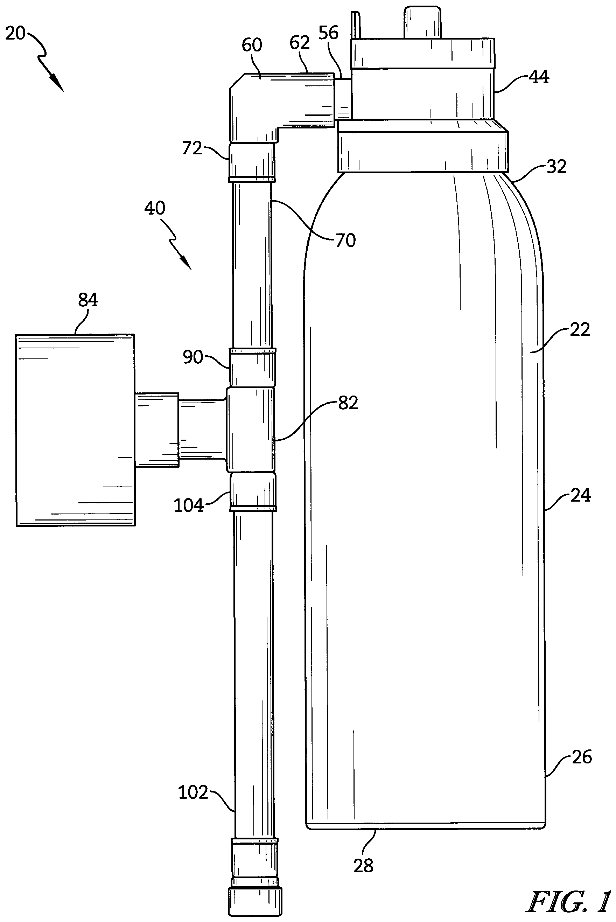

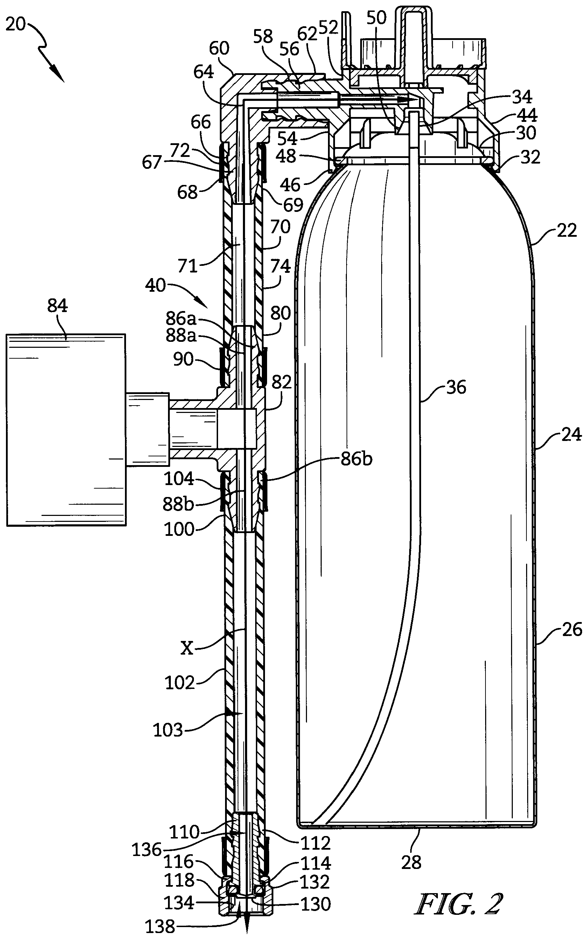

Referring to FIGS. 1 and 2, a tire repair product 20 is depicted as including a pressurized container 22. The pressurized container 22 includes any suitable tire inflator composition. The pressurized container 22 they also may include sealing formulation (also termed a sealing component) to repair a puncture within a tire and a liquefied gas or any other suitable propellant (also termed an inflator component) to inflate or assist in re-inflation of a tire after repair. The pressurized container 22 may include any other optional ingredients, for example, water, one or more corrosion inhibitors, one or more emulsifiers, one or more rust inhibitors, and a foaming agent. Other suitable ingredients may be included.

The pressurized container 22 generally includes a housing 24, for example, a generally cylindrical housing, as depicted in FIGS. 1 and 2. Optionally, the pressurized container 22 may be hand held. The housing 24 may be generally formed by a cylindrical side wall 26, a bottom wall 28, and a valve cup 30 attached, for example, by crimping to an upper end 32 of the side wall 26. A valve stem 34 extends outwardly from a central portion of the valve cup 30 and is in fluid communication with a dip tube 36 that extends from the valve stem 34 into the housing 24. The dip tube 36 preferably, although not necessarily, extends to the bottom wall 28 of the housing 24 and is in communication with the contents of the pressurized container 22 to move the contents out of the pressurized container 22 upon activation of the valve stem 34. In simplified terms, when the valve stem 34 is activated, for example by pressure, the pressure on the propellant or liquefied gas is reduced, thereby allowing the propellant or liquefied gas to boil. Boiling causes particles to break free and create a layer of gas adjacent the valve cup 30, which forces the liquid product and some of the propellant or liquefied gas up the dip tube 36 and out the valve stem 34. The pressurized container 22 may be of any suitable construction, as is well known in the art. The device may be provided without a dip tube.

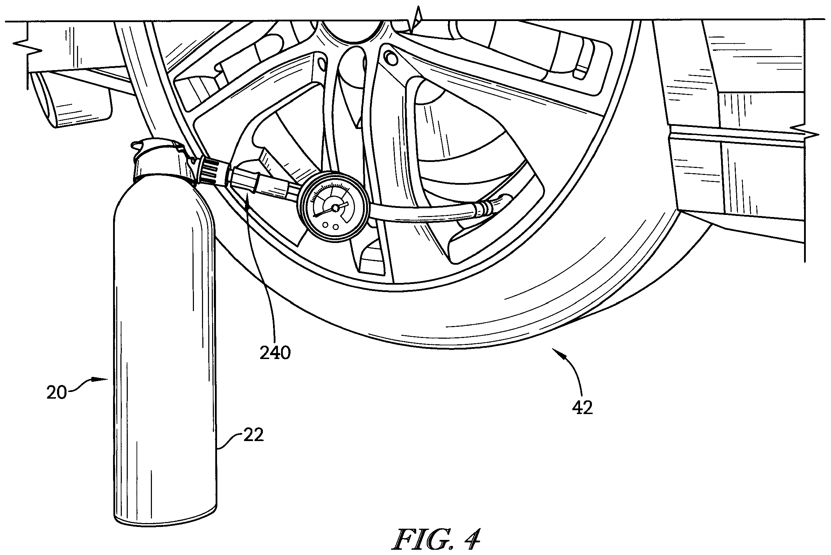

A product delivery device 40 is attached to the valve cup 30 for delivery of the contents of the pressurized container 22 to a tire 42 (FIG. 4). The product delivery device 40 includes a dispensing cap 44 that is attached to the valve cup 30. More particularly, the dispensing cap 44 may be generally cylindrical in shape and may include a plurality of flanges or a single continuous flange 46 that is retained on a seam 48 formed by attaching the valve cup 30 to the housing 24 of the pressurized container 22. While one or more flanges 46 are depicted, the dispensing cap 44 may additionally or alternatively be attached to the pressurized container 22 in any suitable manner, for example, by a screw thread. The dispensing cap 44 may further include a funnel-shaped actuator 50 that is disposed over the valve stem 34 extending from the pressurized container 22. A channel 52 is formed through the dispensing cap 44 and is in fluid communication with the actuator 50. The channel 52 extends through a side wall 54 and through a conduit 56 extending from the side wall 54 of the dispensing cap 44. An outer surface 58 of the conduit 56 may be barbed to assist in attaching the conduit 56 to a fitting or tubing, as will be discussed in greater detail below.

The product delivery device 40 of FIGS. 1 and 2 may further include an L-shaped fitting 60 attached to the conduit 56. More particularly, the L-shaped fitting 60 may include a first end 62 that is attached to the conduit 56 by sliding the first end 62 of the L-shaped fitting 60 over the outer, barbed surface 58 of the conduit 56, such that the barbed surface 58 retains the fitting 60 on the conduit 56. An L-shaped channel 64 extends between the first end 62 and a second end 66 of the L-shaped fitting 60. An outer surface 68 of the second end 66 the L-shaped fitting 60 may be barbed to assist in attaching the L-shaped fitting 60 to, for example, tubing. A first end 69 of a first tube 70, for example made of polyethylene, polypropylene, polyvinylchloride, or any other suitable preferably flexible or inflexible material, and having a channel 71 therethrough, may be attached to the outer, barbed surface 68 of the second end 66 of the L-shaped fitting 60. A gasket 72 may be attached to an outer surface 74 of the first tube 70 disposed around the outer surface 68 of the second end 66 of the L-shaped fitting 60 to ensure a proper seal and prevent leakage at the connection between the first tube 70 and the L-shaped fitting 60. In alternative illustrative embodiments, any suitable seal may be used to prevent leakage, for example, a clamp, tape, or any other suitable member or material. While the gasket 72 is shown as being disposed around only the first tube 70, the gasket 72 or other member or material may be disposed over both the first tube 70 and the L-shaped fitting 60.

Still referring to FIG. 2, a second end 80 of the first tube 70 may be attached to a T-shaped fitting 82 that is in communication with a pressure gauge 84, the function of which will be described in detail below. Such a fitting, providing a closed ended channel, such as in the form of a short tube is advantageous as it enables the gauge to be kept clear of the main flow path from the canister/container and thus reduce the potential for contamination of the gauge, and hence the likelihood of incorrect readings, from composition passing through to the tire. This is particularly so when a sealing component of the tire inflator composition is used. Further advantages of this feature have been mentioned earlier with regard to choice of inflator component and sealant component. The T-shaped fitting 82 may include first and second barbed conduits 86a, 86b having channels 88a, 88b that are in fluid communication with one another and with the pressure gauge 84. The second end 80 of the first tube 70 is attached to the first barbed conduit 86a of the T-shaped fitting 82 by inserting the barbed conduit 86a into the second end 80 of the first tube 70. A gasket 90 may be installed around the second end 80 of the first tube 70 to ensure a proper seal and prevent leakage at the connection between the first tube 70 and the T-shaped fitting 82. As with the gasket 72, in alternative illustrative embodiments, any suitable seal may be used to prevent leakage, for example, a clamp, tape, or any other suitable member or material. While the gasket 90 is shown as being around only the first tube 70, the gasket 90 or other member or material may be disposed over both the first tube 70 and the first barbed conduit 86a of the T-shaped fitting 82.

A first end 100 of a second tube 102 may be attached to the second barbed conduit 86b of the T-shaped fitting 82 by inserting the barbed conduit 86b into a channel 103 at the first end 100 of the second tube 102. A gasket 104 may be installed around the first end 100 of the second tube 102 to ensure a proper seal and prevent leakage at the connection between the second tube 102 and the T-shaped fitting 82. As with the gasket 72, in alternative illustrative embodiments, any suitable seal may be used to prevent leakage, for example, a clamp, tape, or any other suitable member or material. While the gasket 104 is shown as being around only the second tube 102, the gasket 104 or other member or material may be disposed over both the second tube 102 and the second barbed conduit 86b of the T-shaped fitting 82.

Still referring to FIG. 2, a barbed fitting 110 may be inserted into the channel 103 at a second end 112 of the second tube 102. The barbed fitting 110 may have an annular projection 114 that retains an annular lip 116 of a ferrule 118 adjacent the second end 112 of the second tube 102. A gasket may be installed around the second end 112 of the second tube 102 to ensure a proper seal and prevent leakage at the connection between the second tube 102 and the barbed fitting 110. As with the gasket 72, in alternative illustrative embodiments, any suitable seal may be used to prevent leakage, for example, a clamp, tape, or any other suitable member or material. While the gasket is shown as being around only the second tube 102, the gasket 120 or other member or material may be disposed over both the second tube 102 and the ferrule 118.

A valve actuating member 130 is disposed within an end 132 of the barbed fitting 110 adjacent the ferrule 118. An inner surface 134 of the ferrule 118 may be threaded to allow for attachment of the ferrule 118 to a valve of a tire 42. In illustrative embodiments, the valve of the tire 42 is a typical Schrader valve that includes a hollow cylindrical body with a threaded outer surface and a valve core disposed within the body. The valve core includes a pin that, when depressed, opens a valve and, when left alone, closes the valve. When the ferrule 118 is screwed onto the Schrader valve of the tire 42, the pin within the Schrader valve is depressed by the valve actuating member 130 thereby allowing the free flow of fluid into the product dispensing device 40 or product from the pressurized container 22 into the tire 42. The valve actuating member 130 may have a shape (e.g., T-shape) that allows fluid to move past the valve actuating member 130. Similarly, when the ferrule 118 is unscrewed and removed, pressure on the pin of the Schrader valve is removed and the Schrader valve is closed. While a tire 42 with a Schrader valve is disclosed, the present invention may be adapted for use with any tire and any valve.

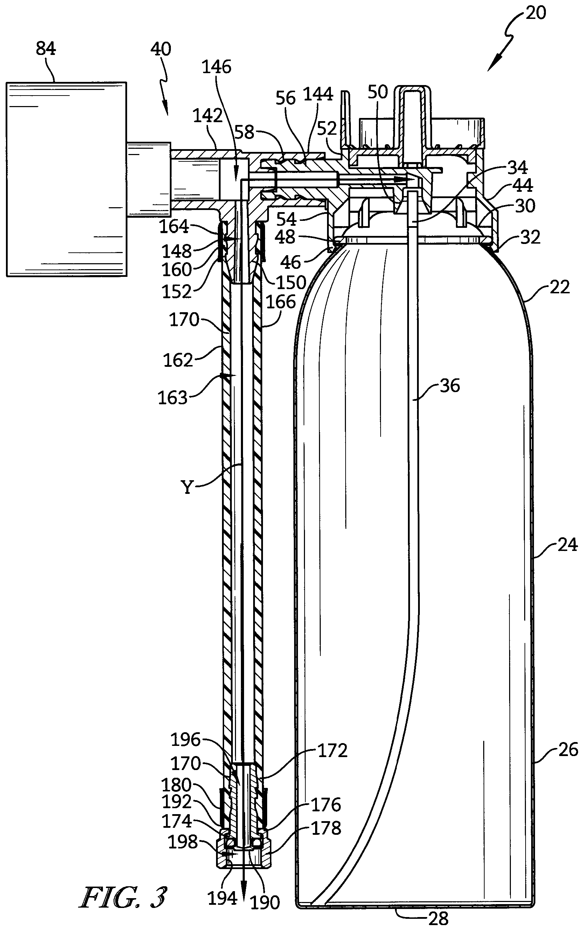

Referring again to FIG. 2, a continuous flow path X is created through the channel 52, the L-shaped channel 64, the channel 71 through the first tube 70, the channels 68a, 68b in the T-shaped fitting 82, the channel 103 through the second tube 102, and channels 136, 138 through the barbed fitting 110 and the ferrule 118 respectively. As noted above, the pressure gauge 84 is attached to the product delivery device 40 at the T-shaped fitting 82 to measure an air pressure within the continuous flow path X and, thus, within the tire 42. While the pressure gauge 84 is depicted as being in a particular location along the continuous flow path X, the pressure gauge 84 may be located at any point along the continuous flow path X, as will be demonstrated in the embodiment of FIG. 3.

During operation, as noted above, the ferrule 118 is screwed onto the Schrader valve of the tire 42, as seen in FIG. 4, to open the Schrader valve. Before activation and dispensing from the pressurized container 22, and while the tire 42 is deflated, air from the tire 42 moves from the tire into the continuous flow path X and the pressure gauge 84 registers an air pressure of the tire 42. When the valve stem 34 on the pressurized container 22 is opened, as described above, the contents of the container 22 begin to move through the continuous flow path X toward the tire 42. Since a pressure within the pressurized container 22 is much greater than a pressure within the tire 42 and the contents of the container 22 are moving toward the tire 42, the pressure gauge 84 cannot register an accurate pressure. When the tire 42 has been sealed, in the case where a puncture was present and at least partially inflated, the valve stem 34 may be closed, in which case, gas flows along the continuous flow path X toward the pressurized container 22, which allows the pressure gauge 84 to accurately register a pressure of the tire 42. The valve stem 34 may be opened and closed any number of times to measure the pressure of the tire 42 until a desired air pressure within the tire 42 is reached. In this manner the benefits of the present invention, achieving a safe tire pressure when using a tire repair apparatus of the present invention are achievable.

The valve stem 34 on the pressurized container 22 may be actuated in any suitable manner. In illustrative embodiments, the dispensing cap 44 may be screwed onto the pressurized container 22, causing the funnel-shaped actuator 50 of the dispensing cap 44 to depress and actuate the valve stem 34. In other illustrative embodiments, the dispensing cap 44 may include a nozzle, a push button, or any other suitable actuating mechanism that causes the funnel-shaped actuator 50 to depress and actuate the valve stem 34. Still optionally, the funnel-shaped actuator 50 may be replaced by any suitable actuator.

A further depiction of the delivery device 40 apparatus of the present invention is depicted in FIG. 3 and is similar to the product delivery device 40 depicted in FIG. 2 and, therefore, like elements will be labeled with like reference numerals and will not be discussed in detail. The product delivery device 140 of FIG. 3 includes a T-shaped fitting 142 attached to the conduit 56. More particularly, the T-shaped fitting 142 includes a first end 144 that is attached to the conduit 56 by sliding the first opening end 144 of the T-shaped fitting 142 over the outer, barbed surface 58 of the conduit 56. The barbed surface 58 retains the T-shaped fitting 142 on the conduit 56. A first channel 146 extends between the first end 144 and the pressure gauge 84, which may be integral with or detachably attached to the T-shaped fitting 142. A second channel 148 extends between the first channel 146 and a second opening end 150 of the T-shaped fitting 142. An outer surface 152 of the second opening end 150 of the T-shaped fitting 142 may be barbed to assist in attaching the T-shaped fitting 142 to, for example, tubing.

A first end 160 of a tube 162, for example, made of polyethylene, polypropylene, polyvinylchloride, (the factors of choice being indicated above) or any other flexible or inflexible material may be attached to the outer, barbed surface 152 of the second opening end 150 of the T-shaped fitting 142. A channel 163 through the tube 162 is in fluid communication with the channels 146, 148 within the T-shaped fitting 142. A gasket 164 may be attached to an outer surface 166 of the tube 162 and disposed around the outer surface 152 of the second opening end 150 of the T-shaped fitting 142 to ensure a proper seal and prevent leakage at the connection between the tube 162 and the T-shaped fitting 142. In alternative illustrative embodiments, any suitable seal may be used to prevent leakage, for example, a clamp, tape, or any other suitable member or material. While the gasket 164 is shown as being around only the tube 162, the gasket 164 or other member or material may be disposed over both the tube 162 and the T-shaped fitting 142.

Still referring to FIG. 3, a barbed fitting 170 may be inserted into the channel 163 at a second end 172 of the tube 162. The barbed fitting 170 may have an annular projection 174 that retains an annular lip 176 of a ferrule 178 adjacent the second end 172 of the tube 162. A gasket 180 may be installed around the second end 172 of the tube 162 to ensure a proper seal and prevent leakage at the connection between the tube 162 and the barbed fitting 170. As with the gasket 164, in alternative illustrative embodiments, any suitable seal may be used to prevent leakage, for example, a clamp, tape, or any other suitable member or material. While the gasket 180 is shown as being around only the tube 162, the gasket 180 or other member or material may be disposed over both the tube 162 and the ferrule 178.

A valve actuating member 190 is disposed within an end 192 of the barbed fitting 170 adjacent the ferrule 178. An inner surface 194 of the ferrule 178 may be threaded to allow for attachment of the ferrule 178 to a valve of a tire 42. In illustrative embodiments, the valve of the tire 42 is a typical Schrader valve that includes a hollow cylindrical body with a threaded outer surface and a valve core disposed within the body. The valve core may include a pin that, when depressed, opens a valve and, when left alone, closes the valve. When the ferrule 178 is screwed onto the Schrader valve of the tire 42, the pin within the Schrader valve is depressed by the valve actuating member 190 within the barbed fitting 170, thereby allowing the free flow of fluid and/or product from the pressurized container 22. The valve actuating member 190 may have a shape (e.g., T-shaped) that allows fluid or product to move past the valve actuating member 190. When the ferrule 178 is unscrewed and removed, pressure on the pin of the Schrader valve is removed and the Schrader valve is closed. While a tire 42 with a Schrader valve is disclosed, the present invention may be adapted for use with any tire and any valve.

Referring again to FIG. 3, a continuous flow path Y is created through the channel 52, the channels 146, 148 in the T-shaped fitting 142, the channel 163 through the tube 162 and channels 196, 198 through the barbed fitting 170, and the ferrule 178, respectively. As noted above, the pressure gauge 84 is attached to the product delivery device 140 at the T-shaped fitting 142 to measure a pressure within the continuous flow path Y and, thus, within the tire 42.

The product delivery device 40, which can be labelled 140, operates in the same manner as the product delivery device 40, as described in relation to FIGS. 1 and 2.

As noted herein, the tubes utilized to form the product delivery devices may be made of any suitable flexible or inflexible material. Any of the fittings described herein may be metal, for example stainless steel, brass, aluminum, or any other suitable metal, or a natural or synthetic plastic, examples of which include nylon, polyvinyl chloride, acrylonitrile butadiene styrene (ABS), polypropylene, polyethylene, polyester, polyurethane, or any other suitable plastic material. However, the tube is preferably made from another material than styrene butadiene rubber since a tire sealant component/composition is designed to adhere to such materials and it is therefore preferable that components of the valve, particularly the valve diaphragm comprise a metal, preferably a polished metal, so as to limit adhesion and contamination of that diaphragm such as may inherit correct measurement. The tube, or parts thereof, is preferably made from a more hydrophobic material than styrene butadiene rubber, such as polyethylene or polypropylene for similar reasons, these materials also being appropriate for use as a tube.

While different embodiments of product delivery devices have been depicted herein, many different configurations of product delivery devices are contemplated by the present application. In particular, any number of fittings (i.e., T-shaped, L-shaped, or any other fittings), tubes, or other conduits may be utilized to create the flow path X, Y and/or the pressure gauge 84 may be attached to the product delivery device at any point along the flow path X. The preferable method of attachment is T-shaped as noted above.

While the embodiments herein are disclosed and discussed herein with respect to particular depictions of tire repair products, one skilled in the art will understand that the concepts of the present disclosure may be incorporated within any suitable tire inflation or repair product within the scope of the claims, although the particular depictions are preferred.

Accordingly, the disclosure is not to be seen as limited by the foregoing description, but is only limited by the scope of the appended claims.

Further, although directional terminology, such as front, back, top, bottom, upper, lower, etc. may be used throughout the present specification, it should be understood that such terms are not limiting and are only utilized herein to convey the orientation of different elements with respect to one another.

## Claims

1. A tire inflation apparatus (20) for inflating a punctured pneumatic tire, the apparatus comprising:
a pressurized container (22) holding at least a tire inflator composition which includes a propellant component; and
a delivery device (40) attached to the pressurized container (22) for delivering said composition from the container to, in use, a tire (42) to be repaired and the delivery device (40) comprising:
an actuator (50) for actuating a valve of the pressurized container (22); for permitting when actuated, pressurised tire inflator composition to be delivered from the pressurized container (22), by means of:
a fluid flow path (X,Y) in fluid communication with the valve of the pressurized container (22); and
a pressure gauge (84) in communication with the fluid flow path (X,Y) to measure a pressure within the fluid flow path (X,Y); **characterised in that**;
the fluid flow path (X,Y) is a tube and the pressure gauge (84) is located at the end of a spur of the tube and the tube defines a channel, said channel having a branch to form the spur.

2. The tire repair apparatus (20) of claim 1, wherein a ferrule (118) is attached to an end of the tube (162), wherein the ferrule (118) is adapted for attachment, in use, to a valve of the tire (42) for permitting, on actuation of the valve of the tire (42), the composition to be transferred under pressure, measurable by said pressure gauge, from the container via the tube to a tire interior.

3. The tire repair apparatus (20) of claim 2, wherein the ferrule (118) is configured to attach to a valve of the tire (42) such as to open the valve of the tire (42)and allow movement of fluid through the valve of the tire (42), such as gas out of the tire (42) or the tire inflator composition from the pressurized container (22) into the tire (42).

4. The tire repair apparatus (20) of any preceding claim wherein the pressure gauge (84) is a digital or mechanical pressure gauge (84) comprising a pressure sensing diaphragm and an attached indicator acting to move in response to deflection of the sensing diaphragm to provide a visual indication of pressure.

5. The tire repair apparatus (20) of any preceding claim, wherein the tire inflator composition includes a tire puncture sealing component and a propellant component.

6. The tire inflation apparatus (20) of any claims 5 wherein the sealing component comprises a fibrous component suitable for being entrained in and blocking a tire puncture.

7. The tire inflation apparatus (20) of any preceding claim wherein the propellant component comprises a volatile liquid which is a gas at 20°C and a liquid in the pressurized container (22).

8. The tire inflation apparatus (20) of any preceding claim wherein the propellant component comprises a fluorocarbon or hydro fluorocarbon.

9. The tire inflation apparatus (20) of any preceding claim, wherein the propellant component comprises trans-1,3,3,3-tetrafluoropropene.

10. A method of carrying out an emergency inflation or repair of a pneumatic tire punctures comprising:
providing an apparatus (20) of any one of claims 1 to 9;
attaching the delivery device (40) to a valve of a tire (42) to place the inner of the pneumatic tire (42) in fluid communication with the delivery device (40) and;
actuating the valve of the apparatus (20) so as to bring the pressurised contents of the pressurised container (22) in to fluid communication with the inner of the tire (42);
actuating said apparatus valve for sufficient time to inflate the tire (42) to a pressure indicated on a gauge to be above a desired final tire pressure:
closing said valve of the apparatus and waiting until the pressure indicated on said gauge stabilises to a steady reading:
repeating said actuation of the valve of the apparatus and subsequent steps until a desired safe tire driving pressure is achieved.

11. The method of claim 10, wherein the pressurised contents comprises a tire inflator composition includes both a sealing component and a propellant component and the dispensing step includes the steps of:
dispensing sealing component into said dispensing apparatus (20), before dispensing propellant component into said dispensing apparatus (20).

12. The method of claim 10, wherein the pressurised contents comprises a tire inflator composition includes both a sealing component and a propellant component and the dispensing step includes the steps of:
dispensing propellant component into said dispensing apparatus (20), before dispensing sealing component into said dispensing apparatus (20).

13. The method of claim 11 or 12 wherein the propellant component is in equilibrium between liquid and gaseous phases at the dispensing pressure of the apparatus.

## Patentansprüche

1. Reifenaufblasvorrichtung (20) zum Aufblasen eines durchstochenen Luftreifens, wobei die Vorrichtung folgendes umfasst:
einen Druckbehälter (22), der mindestens eine Reifenaufblaszusammensetzung enthält, die eine Treibmittelkomponente umfasst; und
eine Abgabevorrichtung (40), die an dem Druckbehälter (22) angebracht ist, um die Zusammensetzung aus dem Behälter im Gebrauch zu einem zu reparierenden Reifen (42) zu befördern, wobei die Abgabevorrichtung (40) umfasst:
ein Betätigungselement (50) zum Betätigen eines Ventils des Druckbehälters (22), um zu ermöglichen, dass bei Betätigung eine unter Druck stehende Reifenaufblasmittelzusammensetzung aus dem Druckbehälters (22) abgegeben wird, mittels:
eines Fluidströmungswegs (X,Y) in Fluidverbindung mit dem Ventils des Druckbehälters (22); und
eines Druckmessers (84), der mit dem Fluidströmungsweg (X,Y) in Verbindung steht, um einen Druck innerhalb des Fluidströmungswegs (X,Y) zu messen; **dadurch gekennzeichnet, dass** der Fluidströmungsweg (X,Y) ein Rohr ist und der Druckmesser (84) am Ende eines Ausläufers des Rohrs angeordnet ist und das Rohr einen Kanal definiert, wobei der Kanal eine Verzweigung aufweist, um den Ausläufer zu bilden.

2. Reifenreparaturvorrichtung (20) nach Anspruch 1, wobei eine Zwinge (118) an einem Ende des Schlauches (162) angebracht ist, wobei die Zwinge (118) so angepasst ist, dass sie im Gebrauch an einem Ventil des Reifens (42) angebracht werden kann, um zu ermöglichen, dass bei Betätigung des Ventils des Reifens (42) die Zusammensetzung unter Druck, der durch den Druckmesser messbar ist, von dem Behälter über den Schlauch zu einem Reifeninneren übertragen wird.

3. Reifenreparaturvorrichtung (20) nach Anspruch 2, wobei die Zwinge (118) so konfiguriert ist, dass sie an das Ventil des Reifens (42) befestigt wird, um das Reifenventil (42) zu öffnen und die Bewegung eines Fluids durch das Ventil des Reifens (42) zu ermöglichen, wie z.B. Gas aus dem Reifen (42) oder die Reifenaufblasmittelzusammensetzung aus dem Druckbehälter (22) in den Reifen (42).

4. Reifenreparaturvorrichtung (20) nach einem der vorangehenden Ansprüche, wobei der Druckmesser (84) ein digitaler oder mechanischer Druckmesser (84) ist, der eine Druckmessmembran und eine angebrachte Anzeige umfasst, die sich als Reaktion auf die Auslenkung der Messmembran bewegt, um eine visuelle Anzeige des Drucks zu liefern.

5. Reifenreparaturvorrichtung (20) nach einem der vorhergehenden Ansprüche, wobei die Zusammensetzung des Reifenaufblasgeräts eine Reifenpannendichtungskomponente und eine Treibmittelkomponente enthält.

6. Reifenaufblasvorrichtung (20) nach einem der Ansprüche 5, wobei die Dichtungskomponente eine Faserkomponente umfasst, die geeignet ist, in ein Reifenloch eingeschleust zu werden und es zu blockieren.

7. Reifenaufblasvorrichtung (20) nach einem der vorhergehenden Ansprüche, wobei die Treibmittelkomponente eine flüchtige Flüssigkeit, die bei 20°C ein Gas ist, und eine Flüssigkeit in dem Druckbehälter (22) umfasst.

8. Reifenaufblasvorrichtung (20) nach einem der vorhergehenden Ansprüche, wobei die Treibmittelkomponente einen Fluorkohlenstoff oder Fluorkohlenwasserstoff umfasst.

9. Reifenaufblasvorrichtung (20) nach Anspruch 9, wobei die Treibmittelkomponente Trans-1,3,3,3-Tetrafluorpropen umfasst.

10. Verfahren zur Durchführung eines Notaufpumpens oder einer Reparatur von Luftreifenpannen, umfassend:
Bereitstellen einer Vorrichtung (20) nach einem der Ansprüche 1 bis 9;
Anbringen der Abgabevorrichtung (40) an einem Ventil des betreffenden Reifens (42), um das Innere des Luftreifens in Fluidverbindung mit der Abgabevorrichtung (40) zu bringen; und
Betätigen des Ventils der Vorrichtung (20), um den unter Druck stehenden Inhalt des Druckbehälters (22) mit dem Inneren des Luftreifens (42) in Fluidverbindung zu bringen;
Betätigen des Ventils der Vorrichtung (20) für eine ausreichende Zeit, um den Reifen auf einen Druck aufzupumpen, der auf dem Manometer (22) oberhalb eines gewünschten Enddrucks des Reifens (42) angezeigt wird:
Schließen des Ventils der Vorrichtung und Abwarten, bis sich der auf dem Reifenmanometer angezeigte Druck auf einen stabilen Wert einpendelt:
Wiederholen der Betätigung des Ventils der Vorrichtung und der nachfolgenden Schritte, bis ein gewünschter sicherer Reifenfahrdruck erreicht ist.

11. Verfahren nach Anspruch 10, wobei die unter Druck stehender Inhalt umfasst eine Reifenfüllerzusammensetzung sowohl eine Dichtungskomponente als auch eine Treibmittelkomponente enthält und der Abgabeschritt die folgenden Schritte umfasst:
Abgeben der Dichtungskomponente in die Abgabevorrichtung vor der Abgabe der Treibmittelkomponente in die Abgabevorrichtung.

12. Verfahren nach Anspruch 10, wobei die unter Druck stehender Inhalt umfasst eine Reifenfüllerzusammensetzung sowohl eine Dichtungskomponente als auch eine Treibmittelkomponente enthält und der Abgabeschritt die folgenden Schritte umfasst:
Abgabe der Treibmittelkomponente in die Abgabevorrichtung (20), bevor die Dichtungskomponente in die Abgabevorrichtung (20) abgegeben wird.

13. Verfahren nach Anspruch 11 oder 12, wobei die Treibmittelkomponente bei dem Abgabedruck der Vorrichtung im Gleichgewicht zwischen flüssiger und gasförmiger Phase ist.

## Revendications

1. Un appareil (20) de gonflage de pneu pour gonfler un pneu crevé, l'appareil comprenant :
un récipient pressurisé (22) contenant au moins une composition de gonflage de pneu qui inclut un composant propulseur; et
un dispositif de distribution (40) fixé au récipient pressurisé (22) pour distribuer ladite composition depuis le récipient conteneur vers, en cours d'utilisation, un pneu (42) à réparer et le dispositif de distribution (40) comprenant :
un actionneur (50) pour actionner une valve du récipient conteneur pressurisé (22) ; pour permettre lorsqu'elle est actionnée, à la composition de gonflage de pneu pressurisée d'être distribuée depuis le récipient, au moyen de :
un chemin d'écoulement de fluide (X,Y) en communication fluidique avec la valve du récipient conteneur pressurisé (22) ;
un manomètre (84) en communication avec le chemin d'écoulement de fluide (X,Y) pour mesurer une pression dans le chemin d'écoulement de fluide (X, Y) ;
**caractérisé en ce que** le chemin d'écoulement de fluide (X,Y) est un tube et le manomètre (84) est situé à l'extrémité d'un ergot du tube, et le tube définit un canal, ledit canal ayant la branche pour former ledit ergot.

2. L'appareil (20) de réparation de pneu de la revendication 1, dans lequel une virole (118) est fixée à une extrémité du tube (162), dans lequel la virole (118) est adaptée pour la fixation, en cours d'utilisation, à une valve du pneu (42) pour permettre, lors de l'actionnement de la valve du pneu (42), que la composition soit transférée sous pression, mesurable par ledit manomètre, depuis le récipient via le tube vers un intérieur de pneu.

3. L'appareil (20) de réparation de pneu de la revendication 2, dans lequel la virole (118) est configurée pour être fixée à une valve du pneu (42) de sorte à ouvrir la valve de pneu (42) et permettre un mouvement de fluide au travers de la valve (42), tel qu'un gaz hors du pneu (42) ou la composition de gonflage de pneu depuis le récipient pressurisé (22) dans le pneu (42).

4. L'appareil (20) de réparation de pneu de l'une quelconque des revendications précédentes dans lequel le manomètre (84) est un manomètre (84) numérique ou mécanique comprenant un diaphragme de détection de pression et un indicateur attaché agissant pour se déplacer en réponse à la déviation du diaphragme de détection pour fournir une indication visuelle de la pression.

5. L'appareil (20) de réparation de pneu d'une quelconque revendication précédente, dans lequel la composition de gonflage de pneu inclut un composant de colmatage de crevaison et un composant propulseur.

6. L'appareil (20) de gonflage de pneu d'une quelconque revendications 5 dans lequel le composant de colmatage comprend un composant fibreux adapté pour être entraîné dans et bloquer une crevaison de pneu

7. L'appareil (20) de gonflage de pneu d'une quelconque revendication précédente, dans lequel le composant propulseur comprend un liquide volatil qui est un gaz à 20°C et un liquide dans le récipient pressurisé (22).

8. L'appareil (20) de gonflage de pneu d'une quelconque revendication précédente, dans lequel le composant propulseur comprend un fluorocarbure ou un hydrofluorocarbure.

9. L'appareil (20) de gonflage de pneu d'une quelconque revendication précédente, dans lequel le composant propulseur comprend du trans-1,3,3,3-tétrafluoropropène.

10. Un procédé pour réaliser un gonflage ou une réparation d'urgence d'une crevaisons de pneu comprenant :
fournir un appareil (20) de l'une quelconque des revendications 1 à 9 ;
fixer le dispositif de distribution (40) à une valve du pneu (42) à placer l'intérieur du pneu (42) en communication fluidique avec le dispositif de distribution (40) et ;
actionner la valve de l'appareil (20) de manière à amener le contenu pressurisé du récipient pressurisé (22) dans une communication fluide avec l'intérieur du pneu (42);
actionner ladite valve de l'appareil pendant suffisamment de temps pour gonfler le pneu (42) à une pression indiquée sur un manomètre pour être supérieure à une pression de pneu souhaitée au final;
fermer ladite valve de l'appareil et attendre jusqu'à ce que la pression indiquée par ledit manomètre se stabilise à une lecture constante ;
répéter ledit actionnement de la valve de l'appareil et des étapes subséquentes jusqu'à ce qu'une pression de pneu de conduite sécurisée est atteinte.

11. Le procédé de la revendication 10, dans lequel le contenu sous pression comprend une composition de gonfleur de pneu inclut à la fois un composant de colmatage de crevaison et un composant propulseur, et l'étape de distribution inclut les étapes de :
distribuer le composant de colmatage dans ledit appareil de distribution ; avant de
distribuer le composant propulseur dans ledit appareil de distribution.

12. Le procédé de la revendication 10, dans lequel le contenu sous pression comprend une composition de gonfleur de pneu inclut à la fois un composant de colmatage de crevaison et un composant propulseur, et l'étape de distribution inclut les étapes de :
distribuer le composant propulseur dans ledit appareil (20) de distribution avant que la distribution du composant de colmatage dans ledit appareil (20) de distribution.

13. Le procédé de la revendication 11 ou 12, dans lequel le composant propulseur est en équilibre entre phases liquide et gazeuse à la pression de distribution dudit appareil.
